# EUROPÄISCHE PATENTSCHRIFT

(11) **EP 0 680 557 B1**
(45) Veröffentlichungstag und Bekanntmachung des Hinweises auf die Patenterteilung: **03.09.1997**
(21) Anmeldenummer: 92920576.3
(22) Anmeldetag: 01.10.1992
(51) Int. Cl.: F02K 1/66, F02K 1/32, F02K 1/28

(54) **TURBINENSTRAHLTRIEBWERK MIT GEBLÄSE ODER PROP-FAN**
TURBOJET ENGINE WITH A FAN OR PROPFAN
TURBOREACTEUR MUNI D'UNE SOUFFLANTE OU PROPFAN

(30) Priorität: 15.10.1991 DE 4134051
(43) Veröffentlichungstag der Anmeldung: 08.11.1995
(73) Patentinhaber: MTU MOTOREN- UND TURBINEN-UNION MÜNCHEN GMBH, D-80976 München (DE)
(72) Erfinder: LINDNER, Ernst, D-7400 Tübingen (DE); TRITTLER, Guido, Walter, D-8044 Unterschlei heim (DE); BRITZ, Klaus, D-8037 Olching (DE)
(74) Vertreter: Baum, Wolfgang, Dipl.-Ing.
(86) Internationale Anmeldenummer: EP9202274
(87) Internationale Veröffentlichungsnummer: WO9308397

(56) Entgegenhaltungen:
- DE-A- 1 626 030
- DE-A- 1 935 932
- FR-A- 1 463 771
- FR-A- 2 115 250
- GB-A- 1 565 212
- US-A- 5 090 196

## Beschreibung

Die Erfindung bezieht sich auf ein Turbinenstrahltriebwerk nach dem Oberbegriff des Patentanspruchs 1.

Aus der DE-OS 3720318 ist ein für den Unterschallflugbetrieb bestimmtes Gebläsestrahltriebwerk bekannt, bei dem die das Gebläse ummantelnde Triebwerksgondel eine mechanisch durch über dem Umfang verteilte Klappenpaare verformbare Einlauflippe aufweist. Auf diese Weise soll die Triebwerksgondel im meistgebrauchten Marschflugbetrieb verhältnismäßig schlank und verbrauchsoptimal gestaltet werden können; trotzdem sollen kritische Triebwerkszustände, z. B. in der Startphase (Bodenstand, Vollast) mit ausgeprägten Strömungsablösungen an der Innenwand der Lippen - Gondelgeometrie (mangelnde sowie aerodynamisch gestörte Luftversorgung des Triebwerks) beherrscht werden können. Es sollen die betreffenden Klappenpaare neben einer entsprechenden örtlichen Wandaufdickung der Einlauflippe gleichzeitig aus der Umgebung luftversorgte Luftausblase- bzw. Lufteinblasekanäle bereitstellen. Die im bekannten Fall vorgesehene Klappenanordnung erzwingt einen vergleichsweise hohen Bau- und Herstellaufwand. Die Klappen nebst erforderlicher gegenseitiger Umfangsabschottung lassen einen nicht unerheblichen Gewichtszuwachs erwarten. Die ferner im bekannten Fall vorgesehene automatische, statische Differenzdrucksteuerung der betreffenden Klappenpaare hat unter anderem den Nachteil eines in bezug auf einen kritischen Zustand zeitlich verhältnismäßig trägen Ansprechverhaltens, das heißt, z. B. einem aus dem betreffenden kritischen Zustand resultierenden Verdichterpumpen kann möglicherweise nicht rechtzeitig bzw. spontan genug Einhalt geboten werden.

Aus der FR-Patentanmeldung 21 15 250 ist ein Turbinenluftstrahltriebwerk nach dem Oberbegriff des Patentanspruchs 1 bekannt, bei dem die Veränderung der Profilgeometrie eines Propellerkanals im Bereich des Kanalauslasses mittels eines in Strömungsrichtung ausgestoßenen Luftstrahls verändert wird. Die Auslässe für den Druckluftstrahl befinden sich an der Innenseite der Wand des Propellerkanals und sind so gerichtet, daß der Hauptstrahl am Ausgang des Propellerkanals zur Triebwerksachse hin gedrängt wird. Ein Hinweis auf die Veränderung der Propellerkanalgeometrie im Bereich des Strömungseinlasses kann dieser Druckschrift nicht entnommen werden.

Aus der FR-PS 14 63 771 ist eine Vorrichtung zur Regelung des Durchsatzes eines Fluids durch einen Kanal bekannt, bei der am Kanaleinlaß in der Kanalwand angeordnete Druckluftdüsen zur Ausblasung von Druckluft vorgesehen sind. Durch die Steuerung der durch die Düsen ausgeblasenen Druckluft soll die Höhe des Durchsatzes von Fluid durch den Kanal gesteuert werden.

Der vorliegenden Erfindung liegt die Aufgabe zugrunde, ein Triebwerk nach der eingangs genannten Art anzugeben, mit dem die front- und/oder heckseitige Gondel-Wandgeometrie bei vergleichsweise geringem Bau- und Gewichtsaufwand in Abstimmung auf bestimmte kritische Betriebsanforderungen im Sinne einer störungsfreien Luftversorgung des Gebläses und des Grundtriebwerks beeinflußbar ist und zugleich in Abstimmung auf den meistgebrauchten Marschflugbetrieb äußerst schlank und verbrauchsoptimal gestaltbar ist.

Die gestellte Aufgabe ist gemäß Kennzeichnungsteil des Patentanspruchs 1 erfindungsgemäß gelöst.

Gemäß der Erfindung kann auf die Verwendung von Klappen und deren Betätigungs- bzw. Verstellmitteln, z. B. zur radial äußeren Ausrundung und Aufdickung des betreffenden Gondelendes verzichtet werden. Dies ist z. B. für den erwähnten Schubumkehrbetrieb mit rückwärtiger Ansaugung der Gebläseluft über das hintere Düsenende der Gondel hinweg äußerst vorteilhaft; prinzipiell kann dabei das düsenartige Schwanzende für den meistgebrauchten Marschflugbetrieb-nach wie vor - aerodynamisch schlank und dünnwandig spitz endend ausgebildet bleiben. Rein aerodynamisch kann für Schubumkehrung mindestens ein radial äußeres, schwanzseitig koaxiales Wirbelfeld gegenüber der Umgebungs- und Ansaugluftströmung erzeugt werden; weitgehend frei von Gesamtdruckverlusten kann somit die vom Gebläse angesaugte Luft um dieses Wirbel feld herum umgelenkt sowie gleichförmig über dem Umfang verteilt im wesentlichen dem Gebläse und zum geringen Teil dem Grundtriebwerk (verdichter) zugeführt werden.

In weiterer Ausgestaltung der Erfindung können zusätzlich zu den an der Außenseite vorhandenen Ausblaseöffnungen auch an der Innenseite des betreffenden Mantelendes Ausblaseöffnungen für Hochdruckluft vorgesehen sein, so daß durch eine weitere an der Innenseite des Mantels sich ausbildende etwas abgeschwächte Wirbelzone eine im Querschnitt zylindrische oder elliptische oder tropfenförmige Umlenkzone am Umfang des betreffenden Mantelendes der Gondel ausgebildet wird. Die entsprechend ausgeprägten Wirbelfelder können also mittels z. B. aus dem Hochdruckverdichter des Grundtriebwerks entnommender Druckluft im Sinne rein aerodynamischer, gegen die Umgebungsluftströmung zirkulierender Störkörper erzeugt werden.

In einer oder mehreren Zufuhrleitungen zu den Ausblasestellen können Ventile angeordnet sein, die - unter Einschluß des möglichen Schubumkehrbetriebes - als Funktion eines kritischen Triebwerks - oder Flugzustands, also z.B. im Hinblick auf ein bereits sich ankündigendes Verdichterpumpen, rechtzeitig betätigbar sind. Letzteres kann für die frontseitige Einlauflippenbeeinflussung für genannte kritische Phasen äußerst vorteilhaft sein. In Anwendung der Erfindung für genannten Schubumkehrbetrieb ist eine Phasenverschiebung derart von Vorteil, daß bereits in der Phase, in der die Gebläseschaufeln in die Schubumkehrförderstellung verstellt werden, oder kurzzeitig davor, schon die entsprechend erforderliche Luftausblasung am Gondelheck erfolgt.

Es ist möglich, Druck, Menge, Geschwindigkeit und jeweils benötigte Abströmrichtung der als künstlicher Spoiler zugeführten Hochdruckluft den örtlichen Gegebenheiten entsprechend anzupassen; dabei ist eine örtlich über dem Umfang gleichförmige oder ungleichförmige Verteilung von z. B. wahlweise freilegbaren oder absperrbaren Öffnungen, Schlitzen, Durchbrüchen in der örtlichen Innen- oder Außenhaut der Gondel bzw. in relativ zueinander verschiebbaren oder verdrehbaren Luftleit- bzw. Zufuhrelementen erfindungsgemäß möglich. Die Erfindung schließt eine frontseitige Gondel- bzw. Lippenbeeinflussung oder eine gondelheckseitige Beeinflussung bei Schubumkehrbetrieb im Sinne einer besonderen rückwärtigen Lippenausbildung jeweils für sich bei einem Strahltriebwerk ein.

Vorteilhafte Ausgestaltungen des Grundgedankens der Erfindung nach Patentanspruch 1 ergeben sich im übrigen in detaillierterer Kennzeichnung aus den Merkmalen der Patentansprüche 2 bis 11.

Anhand der Zeichnungen ist die Erfindung beispielsweise weiter erläutert; es zeigen:
Fig. 1 eine schematisch sowie als Mittellängsschnitt abschnittsweise dargestellte Anordnung eines Frontgebläses am Triebwerk mit rein aerodynamisch optimierter Beeinflussung der Einlaufströmung am hinteren Mantelende bei Schubumkehrbetrieb,
Fig. 2 einen detailliert und vergrößert dargestellten Ausschnitt nach Figur 1 mit drei aufeinanderfolgenden Reihen von unterschiedlich geneigten Ausblaseöffnungen,
Fig. 3 einen Mittellängsschnitt der gondelartigen Gebläseummantelung mit dem vorderen, die Einlauflippe ausbildenden Mantelende mit Druckluftausblasung und dementsprechend optimierter Einlaufströmung im Standfall des Flugzeugs bei Triebwerksvollast und
Fig. 4 eine Abwandlung der Fig. 1 dergestalt, daß am hinteren Mantelende hinsichtlich einer variablen Abströmrichtung der Druckluft ein verstellbares Ringleitungssystem vorgesehen ist.

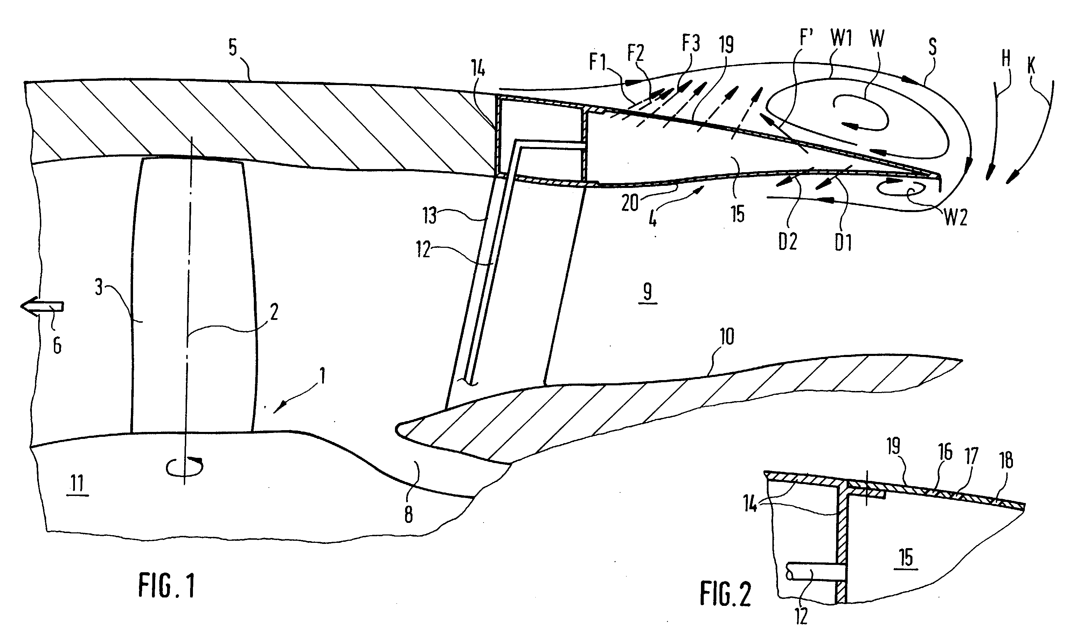

Fig. 1 veranschaulicht vornehmlich das Frontgebläse 1 - bzw. einen Prop-Fan - eines Gasturbinenstrahltriebwerks mit entsprechend der jeweils geforderten Last - und Leistungscharakteristik um Drehachsen 2 verstellbaren Gebläselaufschaufeln 3. Die Gebläselaufschaufeln 3 sind neben positiven Stellungen für Vortriebsschuberzeugung in eine derartige Negativstellung verdrehbar, daß Schubumkehrbetrieb möglich ist, wobei das Frontgebläse 1 Umgebungsluft aus dem Gebiet des stromabwärtigen Mantel endes 4 der gondelartigen Ummantelung 5 ansaugt; der Bremsschub wird dabei über den stromaufwärtig aus dem Frontgebläse 1 abströmenden Massenstrom 6 bereitgestellt; ein Restteil rückwärtig vom Triebwerk angesaugter Luft strömt in einen Ringkanal 8 ab, der zufuhrseitig mit dem Grundtriebwerk in Verbindung steht. Im Normalfall fördert das Frontgebläse 1 überwiegend in einen Sekundärkanal 9, der in Ringform zwischen der Ummantelung 5 und einer Verkleidungswand 10 des Grundtriebwerks ausgebildet ist. Ein Restteil der vom Frontgebläse 1 geförderten Luft gelangt über den Ringkanal 8 in das Grundtriebwerk. Das stromabwärtig spitz auslaufende Ende 4 der Ummantelung 5 bildet im Normalfall (Vortriebsschuberzeugung) zusammen mit dem radial nächstliegenden Abschnitt der Verkleidungswand 10 eine stationäre ringförmige Sekundärschubdüse für den vom Frontgebläse 1 bereitgestellten Massenstrom aus.

Um nun das betreffende hintere Mantelende 4 für den meistgebrauchten Marschflugbetrieb schlank bzw. spitz und verbrauchsoptimal gestalten zu können und trotzdem die aerodynamischen Anforderungen an den beschriebenen Schubumkehrbetrieb zu beherrschen, ist in Fig. 1 z. B. eine außen- und innenwandseitige Druckluftzufuhr vorgesehen; und zwar gemäß Pfeilrichtungen F1, F2 usw. (außen) und gemäß Pfeilen D1, D2 (innen). Die Ausblasefolge F1, F2 usw. ermöglicht den Aufbau eines etwa rotationssymmetrisch zur Triebwerks- oder Gebläseachse verlaufenden Wirbel feldes W, W1 an der Außenseite des stromabwärtigen Mantel endes 4; die Ausblasefolge D1, D2 kann zusätzlich eine etwas abgeschwächte Wirbelzone W2 an der Innenseite besorgen sowie den rückwärtigen Ansaugeffekt verstärken; die Ausprägung des Wirbel feldes W, W1 kann gegebenenfalls durch eine der Ausblasefolge F1, F2 usw. entgegengerichtete Ausblasung F'verstärkt werden. Gemäß Verlauf der Stromlinie S kann also die bei Schubumkehrbetrieb insbesondere am oder im Bereich des Umfangs der Ummantelung 5 entlangströmende Umgebungsluft nahezu ablösungsfrei und im Sinne einer weich ausgerundeten Umlenkung um das spitze Mantelende 4 herum dem Frontgebläse 1 als Ansaugluft zur Verfügung stehen. Ähnliches gilt für bei diesem Schubumkehrbetrieb seitlich (Pfeil H) bzw. von seitwärts hinten (Pfeil K) angesaugte Luftanteile, deren Zuströmung durch die erwähnte Ausblasung ebenfalls homogen, das heißt, weitestgehend ablösungsfrei ist, so daß insgesamt eine mit äußerst geringen Gesamtdruckverlusten erzielbare Luftversorgung des Gebläses 1 bei Schubumkehrbetrieb möglich ist.

Das in den Zeichnungen nicht weiter dargestellte Grundtriebwerk kann der Reihe nach - von links nach rechts gesehen - aus einem mehrstufigen Hochdruckverdichter, einer Ringbrennkammer, einer Antriebsturbine des Hochdruckverdichters bestehen; dieser Antriebsturbine kann eine Niederdruckturbine nachgeschaltet sein, die über einen durch das Hohlwellensystem des Hochdruckteils hindurchgeführte Welle mit dem Frontgebläse 1 gekoppelt ist; ferner können eine oder mehrere Zusatzverdichterstufen, vom Wellenstrang des Frontgebläses 1 angetrieben, dem Hochdruckverdichter vorgeschaltet sein; es kann ferner ein Untersetzungsgetriebe zwischen den Wellenstrang des Niederdrucksystems und den Läufer des Frontgebläses geschaltet sein. Die Laufschaufeln 3 des Frontgebläses 1 sind nabenseitig an einem Zentralkörper 11 verstellbar angeordnet. Die Ausblaseluft kann z. B. aus dem Hochdruckverdichter entnommen und über mindestens eine Entnahmeleitung 12 zugeführt werden; diese ist im vorliegenden Fall durch eine von mehreren hohlen Stützschaufeln 13 geführt, die den Sekundärkanal 9 durchragen; ein stromabwärtiger Teil der Entnahmeleitung 12 ist in einen Torsionskasten 14 geführt und ragt in axialer Richtung in eine Kammer 15 des stromabwärtigen Mantel endes 4 hinein. Zuvor schon erwähnte Ausblaseöffnungen, den Abströmrichtungen nach F1, F2, F3 (Fig. 1) entsprechend, sind aus Fig. 2 entnehmbar und mit 16, 17 und 18 bezeichnet sowie hier in der Außenwand 19 des Mantel endes 4 angeordnet. Man erkennt, daß die Öffnungen 16, 17 und 18, z. B. als Bohrungen oder schlitzartige Durchbrüche oder dergleichen, jeweils unterschiedlich zueinander, bzw., relativ zur Triebwerksachse unterschiedlich von vorn innen nach oben außen geneigt verlaufen. Gemäß Fig. 2 ist die Außenwand 19 fest mit dem Torsionskasten 14 verbunden; sinngemäß gleiches gilt in Verbindung mit der Innenwand 20 (Fig. 1).

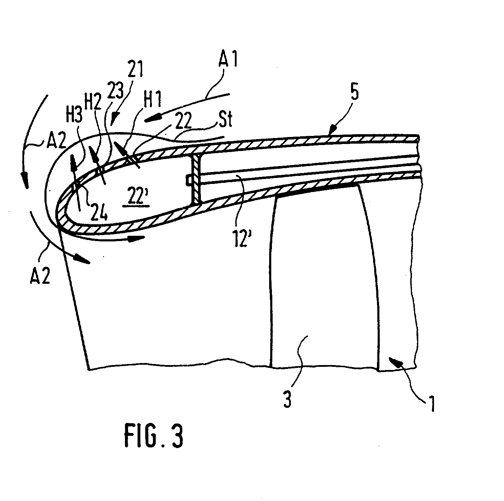

Als Funktion des Triebwerks- und/oder des Umgebungszustands kann die Druckluftzufuhr über Ventile, z. B. ein jeweils in betreffender Entnahmeleitung 12 befindliches Absperrventil, gesteuert werden. Ausblaseöffnungen an der Außen- und/oder Innenwand 19, 20 des Mantel endes 4 können von Bohrungen, Schlitzen oder dergleichen ausgebildet sein oder aber auch durch sieblochartig gestaltete Einrichtungen, wobei auch Kombinationen der genannten Öffnungskonfigurationen möglich sind.
Unter Verwendung gleicher Bezugszeichen für im wesentlichen unveränderte Bauteile verkörpert Fig. 3 Druckluftausblasevorkehrungen, um den Startfall des Flugzeuges, insbesondere bei Triebwerksvollast, zu optimieren. Dabei ist vorrangig das stromaufwärtige Ende 21 der gondelartigen Ummantelung 5 dargestellt, wonach die Einlauflippe mindestens eine Kammer 22' aufweist; in die Kammer 22' ragt das stromabwärtige Ende der Entnahmeleitung 12' hinein, die zunächst über die Stützschaufel 13 (Fig. 1) und in diesem Fall dann in Richtung auf das vordere Mantelende 21 (Einlauflippe) durch die gondelartige Ummantelung 5 hindurchgeführt ist. Dabei wird z. B. über Öffnungen 22, 23, 24 Druckluft H1; H2, H3 an der Außenseite der Lippe ausgeblasen; durch ein so erzeugtes wirbelartiges Druckpolster soll eine aufgedickte Ausrundung an der Lippe geschaffen werden, die durch den Strömungsverlauf St charakterisiert ist. Auf diese Weise kann insbesondere bezüglich von hinten, bzw. seitlich von hinten zuströmender Ansaugluft-Anteile A1, A2 - über dem gesamten Lippenumfang verteilt - eine gleichförmige, möglichst ablösungsfreie und druckverlustarme Ansaugluftbeaufschlagung des Frontgebläses 1 erfolgen. Auf diese beispielhaft genannte Art und Weise kann das stromaufwärtige Mantelende 21 mit der betreffenden Lippengeometrie im Hinblick auf die Kriterien des Marschflugbetriebs gestaltet werden, das heißt schlank, aerodynamisch verlustarm, gewichtlich leicht und verbrauchsoptimal.

In nicht weiter dargestellter Weise ist es nach der Erfindung möglich, zusätzlich - oder für sich - an der Innenseite der Lippe des vorderen Mantel endes 21 Öffnungen so vorzusehen, daß dort auftretende Ablösungen der Luftströmung beseitigt werden. Vornehmlich treten derartige Strömungsablösungen in einem unteren Umfangsbereich von Lippe und Gondel an der Innenseite auf, wenn sich das Flugzeug bei Triebwerksvollast und in einer Startphase - kurz vor Abhebung von der Startbahn - befindet, bei gleichzeitig ausgeprägter Schräganstellung relativ zur Startbahn. Dabei ist es erfindungsgemäß möglich, die Anordnung zuvor genannter Öffnungen zwecks einlaufseitiger Drucklufteinblasung an der Innenseite der Lippen-Gondelgeometrie auf einen örtlich unteren Umfangsbereich zu beschränken.

Ferner ist es möglich, die erwähnten Vorkehrungen und Einrichtungen nach Fig. 1, 2 und 3 in der Kombination bei einem derartigen Gebläsetriebwerk vorzusehen.

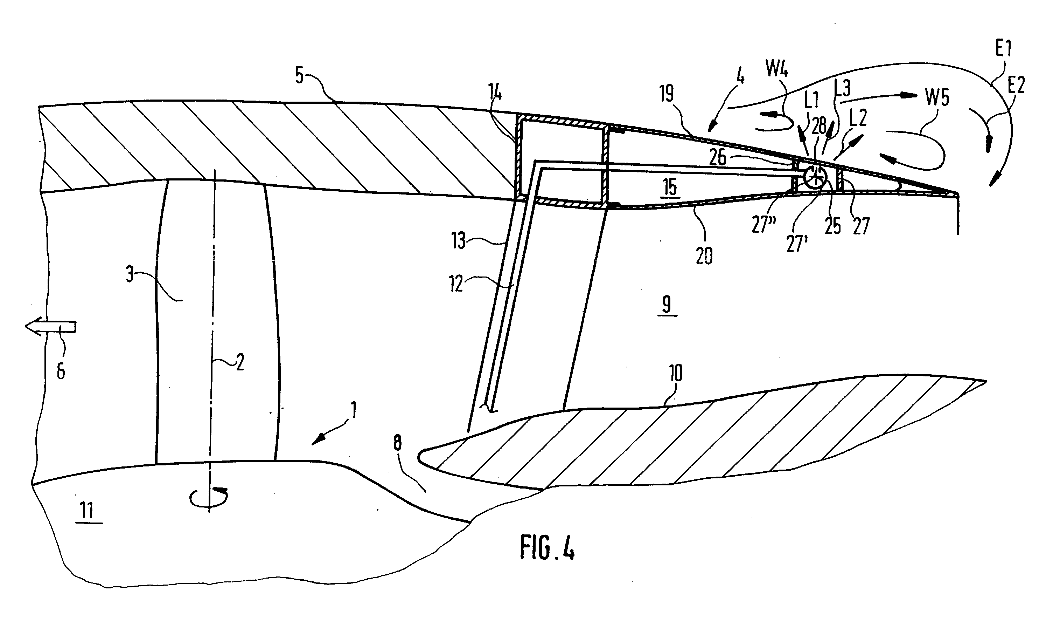

Gemäß Fig. 4 kann - in weiterer Abwandlung der Ausführungsform nach Fig. 1 und 2 - eine hinsichtlich der Abströmrichtungen L1, L2, L3 variable Druckluftausblasung vorgesehen sein. Hierzu weist die mindestens eine Kammer 15 im hinteren Mantelendes 4 eine in Abschnitte zergliederte, über dem Umfang sich erstreckende Ringleitung 25 auf; die jeweiligen Abschnitte dieser Ringleitung 25 sind um ihre Längsachsen verdrehbar gelagert, wobei die Längsachsen bzw. Drehachsen 27' sich quer zur Triebwerks- oder Gebläseachse erstrecken. Die Ringleitung 25 ist durch radiale Stege 26, 27 gegenüber der Kammer 15 abgeschirmt. Die Entnahmeleitung 12 für Druckluft ist über den einen Steg 26 in die Ringleitung 25 geführt. Zweckmäßig kann die Entnahmeleitung 12 an einer betreffenden Stelle, an der eine Drehlagerung eines Leitungsabschnitts ausgebildet ist, der Ringleitung zugeführt werden. Ferner weist die Ringleitung 25 Längsschlitze 27" für die Druckluftausblasung auf; diesen zugeordnete, jedoch mit größerer Breite bzw. Spaltweite versehene Schlitzöffnungen 28 sind in der Außenwand 19 des hinteren Wandelements 4 angeordnet, so daß zwischen L1 und L2 eine winkelverstellbare und gemäß Betriebskriterien variable Druckluftausblasung möglich ist. Bei dem Ausführungsbeispiel nach Fig. 4 wird über etwa mittlere Druckluftausblasung L3, und damit einhergehendem Wirbelfeld W4, W5 rein aerodynamisch eine oberflächenseitige Verdickung und Ausrundung erzielt, die zu einer heckseitig ablösungsfreien Zuströmung E1, E2 und Umlenkung führt, unter Vermeidung der Nachteile des für derartigen Schubumkehrbetrieb ungünstigen, aber für Marschflugbetrieb günstigen, spitzen und schlanken Mantel endes 4.

Um in Beherrschung der eingangs erwähnten kritischen Fälle zugleich eine für Marschflugbetrieb extrem schlanke, widerstandsarme und verbrauchsoptimale Gestaltung insbesondere der vorderen und der hinteren Mantel struktur 21 bzw. 4 zu erzielen, besteht die Möglichkeit, über die an den betreffenden Mantel enden 21, 4 vorhandenen Öffnungen, z. B. 22, 23 und 24 (Fig. 3) bzw. 16, 17, 18 (Fig. 2), eine Absaugung von Luftgrenzschicht vorzunehmen, unter der Voraussetzung, daß an das ursprünglich, bei Druckluftbeaufschlagung stromaufwärtige Ende der mindestens einen Entnahmeleitung 12 bzw. 12' - anstelle eines hohen Druckes gemäß der z. B. aus dem Hochdruckverdichter entnommenen Druckluft - ein verhältnismäßig niedriger Druck angelegt wird, der geringer als der statische Umgebungsdruck sein sollte, der am vorderen bzw. hinteren Mantelende 21 bzw. 4 herrscht.

Soweit nicht schon ausdrücklich in den Patentansprüchen niedergelegt, sind die vorstehend beschriebenen und/oder dargestellten Ausführungsbeispiele Bestandteil der Erfindung.

## Patentansprüche

1. Turbinenstrahltriebwerk mit in einem Sekundärkanal (9) fördernden Gebläse (1) oder Prop-Fan und mit einem äußeren Mantel (5) für das Gebläse (1) und den Sekundärkanal (9), worin das vordere Mantelende (21) mit einer Einlauflippe, das hintere Mantelende (4) düsenartig zugespitzt ausgebildet und zumindest an einem Mantelende die wirksame Profilgeometrie mittels aus dem Triebwerk entnommener, am betreffenden Mantelende (4; 21) ausgeblasener Druckluft (F1, F2; H1, H2) veränderbar ist, dadurch gekennzeichnet, daß die Ausblasung durch an der Außenseite des betreffenden Mantelendes (4, 21) angeordnete Ausblaseöffnungen (16, 17, 18, 22, 23, 24, 28) erfolgt, wobei mittels einer Steuerung die Druckluflausblasung erfolgt, wenn das betreffende Mantelende (4, 21) als Strömungseinlauf dient.

2. Triebwerk nach Anspruch 1, dadurch gekennzeichnet, daß zusätzlich zu den an der Außenseite vorhandenen Ausblaseöffnungen auch an der Innenseite des betreffenden Mantelendes Ausblaseöffnungen (16, 17, 18) für Hochdruckluft vorgesehen sind.

3. Triebwerk nach Anspruch 1 oder 2, dadurch gekennzeichnet, daß die Ausblaseöffnungen mit in dem Mantelende (4, 21) vorgesehenen Druckluftkammern (15, 22') in Verbindung stehen.

4. Triebwerk nach einem oder mehreren der Ansprüche 1 bis 3, dadurch gekennzeichnet, daß mehrere unterschiedlich zur Gebläse- oder Triebwerksachse geneigte Durchgangsöffnungen (16, 17, 18) auf der Außenseite des betreffenden Mantelendes (4) so angeordnet sind, daß eine etwa rotationssymmetrisch in Umfangsrichtung verlaufende Wirbelzone (W, W1) gegenüber der Ansaugluftströmung ausbilden.

5. Triebwerk nach einem oder mehreren der Patentansprüche 1 bis 4, dadurch gekennzeichnet, daß die Ausblaseöffnungen (16, 17, 18) von Schlitzen, Bohrungen oder sieblochartigen Wandelementen oder Kombinationen der genannten Öffnungsarten gebildet sind.

6. Triebwerk nach einem oder mehreren der Ansprüche 1 bis 5, dadurch gekennzeichnet, daß mindestens eine vorzugsweise mit dem Hochdruckverdichter des Triebwerks verbundene Entnahmeleitung (12; 12') vorgesehen ist, die mit mindestens einer Kammer (15; 22) im betreffenden Mantelende (4; 21) in Verbindung steht, und die durch eine den Sekundärkanal (9) durchragende Stützschaufel (13) oder einen Tragmast (pylon) hindurchgeführt ist.

7. Triebwerk nach einem oder mehreren der Patentansprüche 1 bis 6, dadurch gekennzeichnet, daß die Druckluft über eine oder mehrere sich über dem Umfang im betreffenden Mantelende (4) erstreckende Ringleitungen (25) zugeführt wird, die mit ihren Ausblaseöffnungen (27") um quer zur Gebläse- oder Triebwerksachse sich erstreckende Drehachsen (27') schwenkbar sind.

8. Triebwerk nach einem oder mehreren der Patentansprüche 1 bis 7, dadurch gekennzeichnet, daß die Ausblaseöffnungen (27") über die verdrehbaren Ringleitungen (25) gegenüber in der Außen- oder Innenwand (19, 20) enthaltenen Schlitzöffnungen (28) hinsichtlich variierbarer Abströmrichtungen (L1, L2, L3) justierbar sind.

9. Triebwerk nach einem oder mehreren der Patentansprüche 1 bis 8, dadurch gekennzeichnet, daß die Steuerung in der betreffenden Entnahmeleitung (12; 12') für die Druckluft ein als Funktion des Triebwerkslastzustands und/oder Umgebungszustands gesteuertes Absperrventil umfaßt.

10. Triebwerk nach einem oder mehreren der Patentansprüche 1 bis 9, dadurch gekennzeichnet, daß die Ausblaseöffnungen (16, 17, 18; 22, 23, 24) zusätzlich als Absaugöffnungen für wandseitige Luftgrenzschicht verwendet werden, indem an der betreffenden Entnahmeleitung (12; 12') ein relativ zur Absaugstelle ausreichend geringer Unterdruck angelegt wird.

11. Triebwerk nach einem oder mehreren der Patentansprüche 1 bis 10, dadurch gekennzeichnet, daß die Steuerung der Druckluftausblasung bereits in der Phase aktivierbar ist, in der die Gebläseschaufeln in eine Schumbumkehrförderstellung verstellt werden.

## Claims

1. A turbojet engine having a fan (1) or prop-fan operating in a secondary duct (9) and having an external casing (5) for the fan (1) and the secondary duct (9), wherein the front casing end (21) is provided with an intake lip, the rear casing end (4) tapers in the manner of a nozzle, and the effective profile geometry is changeable at least at one casing end by means of compressed air (F1, F2; H1, H2) extracted from the engine and discharged at the respective casing end (4, 21), characterised in that the compressed air is discharged through exhaust openings (16, 17, 18, 22, 23, 24, 28) provided on the outside of the respective casing end (4, 21), the compressed air being discharged by means of a control device when the respective casing end (4, 21) serves as a flow intake.

2. An engine according to claim 1, characterised in that, in addition to the exhaust openings provided on the outside, exhaust openings (16, 17, 18) for highly compressed air are also provided on the inside of the respective casing end.

3. An engine according to claim 1 or 2, characterised in that the exhaust openings communicate with the compressed-air chambers (15, 22') provided in the casing end (4, 21).

4. An engine according to one or more of claims 1 to 3,
characterised in that a plurality of passage openings (16, 17, 18), inclined at different angles to the axis of the fan or engine, are provided on the outside of the respective casing end (4) in such a manner that an eddy zone (W, W1), substantially having rotational symmetry in the peripheral direction, forms opposite the intake-air flow.

5. An engine according to one or more of claims 1 to 4,
characterised in that the exhaust openings (16, 17, 18) are formed by slots, bores or screen-hole-type wall members or combinations of the aforesaid types of opening.

6. An engine according to one or more of claims 1 to 5,
characterised in that at least one extraction line (12, 12'), preferably connected to the high-pressure compressor of the engine, communicates with at least one chamber (15, 22) in the respective casing end (4, 21) and is guided through a supporting blade (13) extending through the secondary duct (9), or a pylon.

7. An engine according to one or more of claims 1 to 6,
characterised in that the compressed air is supplied via one or more ring conduits (25) extending over the periphery in the respective casing end (4) and being rotatable with their exhaust openings (27") about rotation axes (27') extending transversely to the axis of the fan or engine.

8. An engine according to one or more of claims 1 to 7,
characterised in that the exhaust openings (27") are adjustable via the rotatable ring conduits (25) in relation to slot-type openings (28) provided in the outer or inner wall (19, 20) with respect to variable outflow directions (L1, L2, L3).

9. An engine according to one or more of claims 1 to 8,
characterised in that the control device in the respective extraction line (12, 12') for the compressed air comprises a shut-off valve controlled as a function of the engine load and/or ambient conditions.

10. An engine according to one or more of claims 1 to 9,
characterised in that the exhaust openings (16, 17, 18; 22, 23, 24) are additionally used as suction openings for a wall air boundary layer by means of reduced pressure, which is sufficiently low relative to the suction point, being applied to the respective extraction line (12, 12').

11. An engine according to one or more of claims 1 to 10,
characterised in that the device for controlling the discharge of compressed air is already activatable in the phase in which the fan blades are adjusted into a thrust-reversal delivery position.

## Revendications

1. Turboréacteur comportant une machine soufflante ou Prop-Fan (1) alimentant un canal secondaire (9), une enveloppe extérieure (5) pour la machine soufflante (1) et le canal secondaire (9), l'extrémité avant (21) de l'enveloppe ayant une lèvre d'entrée et l'extrémité arrière (4) de l'enveloppe étant affinée en forme de tuyère, tandis qu'à au moins une extrémité de l'enveloppe, on modifie la géométrie active du profil avec de l'air comprimé (F1, F2 ; H1, H2) fourni par le moteur et soufflé à l'extrémité correspondante de l'enveloppe (4, 21),
caractérisé en ce que
le soufflage se fait par des orifices de soufflage (16, 17, 18, 22, 23, 24, 28) prévus sur le côté extérieur de l'extrémité correspondante (4, 21) de l'enveloppe, et le soufflage d'air comprimé se fait à l'aide d'une commande lorsque l'extrémité correspondante de l'enveloppe (4, 21) constitue l'entrée de l'écoulement.

2. Turboréacteur selon la revendication 1,
caractérisé en ce qu'
en plus des orifices de soufflage prévus sur le côté extérieur, il y a également, sur le côté intérieur de l'extrémité correspondante de l'enveloppe, des orifices de soufflage (16, 17, 18) pour de l'air à haute pression.

3. Turboréacteur selon l'une des revendications 1 ou 2,
caractérisé en ce que
les orifices de soufflage communiquent avec des chambres d'air comprimé (15, 22') prévues dans l'extrémité (4, 21) de l'enveloppe.

4. Turboréacteur selon l'une quelconque des revendications 1 à 3,
caractérisé en ce que
plusieurs orifices de passage (16, 17, 18) inclinés différemment par rapport à l'axe de la machine soufflante ou du moteur, sont prévus sur le côté extérieur de l'extrémité correspondante (4) de l'enveloppe et forment une zone de turbulence (W, W1) ayant une symétrie de rotation, dans la direction périphérique, par rapport à l'écoulement de l'air aspiré.

5. Turboréacteur selon l'une quelconque des revendications 1 à 4,
caractérisé en ce que
les orifices de soufflage (16, 17, 18) sont constitués par des fentes, des perçages, des éléments de paroi en forme de tamis ou des combinaisons de ces moyens.

6. Turboréacteur selon l'une quelconque des revendications 1 à 5,
caractérisé par
au moins une conduite de prise (12, 12') reliée de préférence au compresseur haute pression du moteur, conduite qui communique avec au moins une chambre (15, 22) de l'extrémité correspondante (4, 21) de l'enveloppe et traverse une aube d'appui (13) ou un mât de support (pylône) traversant le canal secondaire (9).

7. Turboréacteur selon l'une quelconque des revendications 1 à 6,
caractérisé en ce que
l'air comprimé est fourni par une ou plusieurs conduites annulaires (25) qui s'étendent sur la périphérie de l'extrémité correspondante (4) de l'enveloppe, ces conduites pouvant basculer avec l'air aux orifices de soufflage (27'') suivant un axe de rotation (27') transversal par rapport à l'axe de la machine soufflante du moteur.

8. Turboréacteur selon l'une quelconque des revendications 1 à 7,
caractérisé en ce que
les orifices de soufflage (27'') sont réglables par des conduites annulaires (25) pouvant tourner, par rapport à des orifices en forme de fentes (28) prévus dans la paroi extérieure ou la paroi intérieure (19, 20) pour modifier les directions d'écoulement (L1, L2, L3).

9. Turboréacteur selon l'une quelconque des revendications 1 à 8,
caractérisé en ce que
la commande, dans les conduites de prise (12, 12') pour l'air comprimé, comprend une vanne d'arrêt commandée suivant l'état de charge du moteur et/ou l'état de l'environnement.

10. Turboréacteur selon l'une quelconque des revendications 1 à 9,
caractérisé en ce que
les orifices de soufflage (16, 17, 18 ; 22, 23, 24) s'utilisent en outre comme des orifices d'aspiration pour la couche d'air limite, du côté de la paroi, en appliquant aux conduites de prise (12, 12') une légère pression, suffisante, par rapport aux points d'aspiration.

11. Turboréacteur selon l'une quelconque des revendications 1 à 10,
caractérisé en ce que
la commande du soufflage d'air comprimé est activée déjà dans la phase pendant laquelle les aubes de la machine soufflante sont mises en position d'inversion de poussée.
